# EUROPEAN PATENT APPLICATION

(11) **EP 4 711 244 A1**
(43) Date of publication of application: **18.03.2026**
(21) Application number: 25201497.2
(22) Date of filing: 10.09.2025
(51) Int. Cl.: B62D 6/00, B62D 15/02, B66F 9/075

(54) **WORKING VEHICLE STEERING SYSTEM**

(30) Priority: 12.09.2024 GB 202413411
(71) Applicant: JCB Access Limited, Uttoxeter, Staffordshire ST14 5JP (GB)
(72) Inventor: Kerrigan, Richard, Uttoxeter, ST14 5JP (GB); Bell, Samuel, Uttoxeter, ST14 5JP (GB)
(74) Representative: Hambley, Christopher John

(57) **Abstract**

Aspects of the present invention relate to a working vehicle steering system 100. The working vehicle steering system comprises: one or more steerable wheels 14; a steering actuation system 120 configured to move the one or more steerable wheels between a range of steering angles; a steering angle sensor 108; and a controller 136. The controller is configured to: receive a steering angle signal 110 from the steering angle sensor; determine whether a steering angle of the one or more steerable wheels is within a predetermined steering angle range; and when it is determined that the steering angle is within the predetermined steering angle range, output a control signal 138 to direct the steering actuation system to automatically move the one or more steerable wheels towards a central steering angle position.

## Description

### FIELD

The present disclosure relates to a working vehicle steering system. Aspects of the invention relate to a working vehicle steering system, to a working vehicle, to a controller, and to a method.

### BACKGROUND

Various different types of steering systems are known for working vehicles. For example, some working vehicles have a steering wheel which is used to steer ground-engaging wheels via a mechanical coupling. This offers benefits such as: easy control of steering; visual indication of steering position based on rotational position of the steering wheel; and self-centring of the steering via a mechanical restoring force (e.g., a restoring force generated by a caster angle of the ground-engaging wheels).

For some working vehicles, other types of steering input are used. For example, joysticks, levers, steering buttons or other inputs may be used instead of a steering wheel. Such inputs may provide an electronic input to an electronic control system in order to actuate a steering actuator, such as a hydraulic steering cylinder. This offers various benefits in comparison to a mechanical steering wheel, such as: increased compactness of the steering input; increased flexibility of positioning of the steering input on the working vehicle; and increased control options via the electronic control system.

It is an aim of the present invention to address one or more of the disadvantages associated with the prior art.

### SUMMARY

The present teachings provide a working vehicle steering system, a working vehicle, a controller and a method according to the appended claims.

An aspect of the teachings provides a working vehicle steering system. The working vehicle steering system may comprise one or more steerable wheels. The working vehicle steering system may also comprise a steering actuation system configured to move the one or more steerable wheels between a range of steering angles. The working vehicle steering system may also comprise a steering angle sensor configured to provide a steering angle signal indicative of the steering angle of the one or more steerable wheels. The working vehicle steering system may also comprise a controller.

Optionally, the controller is configured to: a) receive the steering angle signal from the steering angle sensor; b) determine from the steering angle signal whether the steering angle of the one or more steerable wheels is within a predetermined steering angle range; and c) when it is determined that the steering angle of the one or more steerable wheels is within the predetermined steering angle range, output a control signal to direct the steering actuation system to automatically move the one or more steerable wheels towards a central steering angle position.

In some working vehicles, it is difficult for a user to manually set the one or more steerable wheels to a central steer angle using a steering input (e.g., buttons or wheel). This may result in the user having to make repeated steering adjustments when trying to move the working vehicle in a straight line. This problem may be overcome by having a controller configured to output a control signal to automatically move the one or more steerable wheels towards a central steering angle position when the steering angle is within the predetermined steering angle range (e.g., an angle range spanning the central steering angle position).

Optionally, the working vehicle steering system comprises a manual override input. Optionally, the controller is configured not to output the control signal to direct the steering actuation system to automatically move the one or more steerable wheels towards the central steering angle position when the manual override input is activated by a user. In this way, the operator of the working vehicle is able to switch off the automatic movement of the steerable wheels towards a central steering angle position when desired.

Optionally, the working vehicle steering system comprises a steering input for manually controlling the steering actuation system. Optionally, the controller is configured to determine whether the steering input is being actuated by a user or not. Optionally, the controller is configured to output the control signal when it is determined that the steering input is not being actuated by a user.

Optionally, the controller is configured not to output the control signal when it is determined that the steering input is being actuated by a user. In other words, the controller may be configured to only output the control signal when it is determined that the steering input is not being actuated by a user. In this way, the controller is configured not to override manual steering inputs so that the user retains control of the working vehicle steering system.

Optionally, the steering input is configured to send a steering signal to the controller. Optionally, the controller is configured to determine whether the steering input is being actuated by a user or not from the steering signal. In other words, the steering input may be an electronic steering input (e.g., an electronic button, switch, lever, joystick, or steering wheel). This provides a simple means of determining whether the steering input is being actuated (e.g., instead of having a sensor to detect movement of a mechanically-coupled steering input).

Optionally, the controller is configured to output the control signal when it is determined that the steering angle of the one or more steerable wheels has been within the predetermined steering angle range for more than a predetermined amount of time. In other words, the controller may implement a delay before automatically moving the one or more steerable wheels towards the central steering position. This may avoid unwanted movement to the central steering angle position (e.g., when a user stops steering temporarily).

Optionally, the controller is configured to output the control signal when it is determined that the steering angle has not changed and has been within the predetermined steering angle range for more than a predetermined amount of time. In other words, the controller may not output the control signal when the steering angle is changing (e.g., when passing through the predetermined steering angle range during a change from left to right steering or vice versa). In this way, the controller may be configured not to override manual steering inputs so that the user retains control of the working vehicle steering system.

Optionally, the predetermined amount of time is 4 seconds or less, optionally 3 seconds or less, optionally 2 seconds or less, optionally 1 second or less. Such a predetermined amount of time provides sufficient delay to limit unwanted movement to the central steering angle position, whilst also being responsive enough to react before a user has to take corrective action to adjust the steering angle.

Optionally, the predetermined steering angle range is defined by steering angles of about 10 degrees or less from the central steering angle position, optionally steering angles of about 5 degrees or less from the central steering angle position, optionally steering angles of about 3 degrees or less from the central steering angle position, optionally steering angles of about 2 degrees or less from the central steering angle position.

In other words, the predetermined steering angle range spans the central steering angle position, and the predetermined steering angle range may comprise a leftmost angular position and a rightmost angular position, wherein the leftmost and rightmost angular positions are each about 10 degrees or less from the central steering angle position, optionally about 5 degrees or less from the central steering angle position, optionally about 3 degrees or less from the central steering angle position, optionally about 2 degrees or less from the central steering angle position. Such a predetermined steering angle range is small enough to avoid interfering with normal steering, which is typically carried out at greater steering angles.

Optionally, the controller is configured to: a) determine that it is desired to move the one or more steerable wheels to a central steering angle position; and b) when it is determined that it is desired to move the one or more steerable wheels to the central steering angle position, output a control signal to the steering actuation system to automatically move the one or more steerable wheels towards the central steering angle position.

Such a working vehicle steering system is configured to assist a user in returning the one or more steerable wheels to a central steering angle.

Optionally, the steering actuation system comprises one or more electric linear actuators configured to move the one or more steerable wheels between a range of steering angles.

Optionally, the steering actuation system comprises one or more hydraulic steering cylinders configured to move the one or more steerable wheels between the range of steering angles. Such hydraulic steering cylinders provide a simple means of selectively moving the one or more steerable wheels that can be actuated by a control system (e.g., using one or more valves).

Optionally, the steering actuation system comprises a hydraulic fluid reservoir, a pump configured to supply a flow of hydraulic fluid to the one or more hydraulic steering cylinders, and a valve arrangement configured to control the flow of hydraulic fluid to and from the one or more hydraulic steering cylinders.

Optionally, the steering actuation system comprises an electrohydraulic valve arrangement configured to control a flow of hydraulic fluid to and from the one or more hydraulic steering cylinders. Such an electrohydraulic valve arrangement provides greater control flexibility than alternatives such as mechanical or pilot-operated hydraulic valves. This allows the controller to automatically move the one or more steerable wheels towards the central steering angle without any additional components (e.g., in contrast to a mechanically-actuated steering orbitrol, which would require an electric motor or other actuator to move the mechanical input to the steering orbitrol in order to automatically move the one or more steerable wheels).

The controller may be configured to output the control signal to the electrohydraulic valve arrangement to actuate the one or more hydraulic steering cylinders and thereby automatically move the one or more steerable wheels towards the central steering angle.

Optionally, the steering actuation system comprises one or more hydraulic steering cylinders configured to move the one or more steerable wheels between a range of steering angles, and an electrohydraulic valve arrangement configured to control a flow of hydraulic fluid to and from the one or more hydraulic steering cylinders.

Optionally, the controller is configured to: a) determine that it is desired to move the one or more steerable wheels to a central steering angle position; and b) when it is determined that it is desired to move the one or more steerable wheels to the central steering angle position, output a control signal to the one or more electric linear actuators, or to the electrohydraulic valve arrangement to actuate the one or more hydraulic steering cylinders, and thereby automatically move the one or more steerable wheels towards the central steering angle position.

Such a working vehicle steering system is configured to assist a user in returning the one or more steerable wheels to a central steering angle. In addition, having one or more electric linear actuators, or an electrohydraulic valve arrangement to actuate one or more hydraulic steering cylinders, provides greater control flexibility than alternatives such as mechanical or pilot-operated hydraulic valves. This allows the controller to automatically move the one or more steerable wheels towards the central steering angle without any additional components (e.g., in contrast to a mechanically-actuated steering orbitrol, which would require an electric motor or other actuator to move the mechanical input to the steering orbitrol in order to automatically move the one or more steerable wheels).

Optionally, the controller is configured to receive an input signal which is indicative of a desire to move the one or more steerable wheels to the central steering angle position. Optionally, the input signal is a signal from a user input. Optionally, the input signal is a signal from a sensor. Optionally, the controller is configured to determine that it is desired to move the one or more steerable wheels to the central steering angle position based on the input signal.

Optionally, the working vehicle steering system comprises a steering mode input for selecting different steering modes of the working vehicle steering system. Optionally, the controller is configured to determine that it is desired to move the one or more steerable wheels to the central steering angle position when the steering mode input is actuated by a user to change the steering mode of the working vehicle steering system.

It will be understood that it may be necessary to return the one or more steerable wheels to the central steering angle position when switching between different steering modes. Therefore, when the steering mode input is actuated, the controller may automatically centre the one or more steerable wheels so that the steering mode can be changed.

Optionally, the different steering modes comprise at least two of: a 2-wheel steering mode; a standard 4-wheel steering mode; and a 4-wheel crab steering mode.

Optionally, the working vehicle steering system comprises a manually actuatable return-to-centre input. Optionally, the controller is configured to determine that it is desired to move the one or more steerable wheels to the central steering angle position when the return-to-centre input is actuated by a user. Such an input provides a simple means of manually requesting centring of the one or more steerable wheels (e.g., when a user wants to move the working vehicle in a straight line, they can press the return-to-centre input instead of having to gradually adjust a steering input).

Optionally, the working vehicle steering system comprises a steering input for manually controlling the steering actuation system. Optionally, the controller is configured to determine that it is desired to move the one or more steerable wheels to the central steering angle position when the steering input is actuated to start moving the one or more steerable wheels towards the central steering angle position.

Typically, a steering input is actuated to return the one or more steerable wheels towards the central steering angle position after a turn has been made. Therefore, by detecting this and then automatically moving the one or more steerable wheels, the controller is configured to assist the user to return to the central steering angle position with less effort.

Optionally, the electrohydraulic valve arrangement comprises a solenoid-operated directional control valve. Such a solenoid-operated directional control valve provides a simple means of controlling flow to/from hydraulic steering cylinder(s) using electrical control signals.

Optionally, the steering actuation system comprises a hydraulic fluid reservoir, a pump configured to supply a flow of hydraulic fluid to the one or more hydraulic steering cylinders

Optionally, the one or more steerable wheels comprise a left steerable wheel and a right steerable wheel.

Optionally, the one or more electric linear actuators comprise a left electric linear actuator configured to move the left steerable wheel and a right electric linear actuator configured to move the right steerable wheel. Separate left and right electric linear actuators provide more steering flexibility (e.g., the left wheel can be steered independently of the right wheel).

Alternatively, the one or more electric linear actuators may comprise a double-acting electric linear actuator configured to simultaneously move both the left and right steerable wheels.

Optionally, the one or more hydraulic steering cylinders comprise a left hydraulic steering cylinder configured to move the left steerable wheel and a right hydraulic steering cylinder configured to move the right steerable wheel. Separate left and right hydraulic steering cylinders provide more steering flexibility (e.g., the left wheel can be steered independently of the right wheel).

Alternatively, the one or more hydraulic steering cylinders may comprise a double-acting hydraulic steering cylinder configured to simultaneously move both the left and right steerable wheels. Such a double-acting hydraulic steering cylinder may simplify the number of mechanical and hydraulic connections required in comparison to separate left and right hydraulic steering cylinders.

Optionally, the working vehicle steering system comprises a steering input for manually controlling the steering actuation system. Such a steering input allows manual control of the steering actuation system.

Optionally, the steering input comprises left and right steering buttons or switches. Optionally, the steering input comprises a lever or joystick. Optionally, the steering input comprises a steering wheel. Such a steering input provides a simple means of manually controlling the steering actuation system.

Optionally, the controller is configured to determine whether the one or more steerable wheels are rotating or not. Optionally, the controller is configured to output the control signal when it is determined that the one or more steerable wheels are rotating.

Optionally, the controller is configured not to output the control signal when it is determined that the one or more steerable wheels are not rotating. In other words, the controller may be configured to only output the control signal when it is determined that the one or more steerable wheels are rotating. In this way, "dry" steering may be avoided. This reduces the likelihood of damage to tyres of the one or more steerable wheels and/or other parts of the working vehicle steering system.

Optionally, the controller is configured to receive a traction signal from a traction input of the working vehicle, and the controller is configured to determine whether the one or more steerable wheels are rotating or not based on the traction signal. This provides a simple means for determining that the one or more steerable wheels are rotating.

Optionally, the controller is configured to send an output signal to one or more prime movers for driving the one or more steerable wheels. Optionally, the controller is configured to determine whether the one or more steerable wheels are rotating or not based on the output signal. This provides a simple means for determining that the one or more steerable wheels are rotating.

Optionally, the controller is configured to receive a movement signal from a movement sensor (e.g., speedometer). Optionally, the controller is configured to determine whether the one or more steerable wheels are rotating or not based on the movement signal. This provides a simple means for determining that the one or more steerable wheels are rotating.

Optionally, the one or more steerable wheels are each carried by a respective wheel hub pivotally mounted to an axle.

Optionally, the working vehicle steering system comprises a steering angle sensor configured to provide a steering angle signal indicative of the steering angle of the one or more steerable wheels.

Optionally, the steering angle sensor comprises a linkage coupled between the wheel hub and the axle, and a position sensor configured to output the steering angle signal based on a position of the linkage. Such a steering angle sensor provides a simple and accurate means of determining steering angle.

Alternatively, the steering angle sensor may comprise a piston displacement sensor configured to output the steering angle signal based on a position of a piston of a hydraulic steering cylinder of the steering actuation system. Such a steering angle sensor provides an alternative means of determining steering angle.

Optionally, the wheel hub comprises an electric traction motor for driving the associated steerable wheel. Such an electric traction motor in the wheel hub provides a simple means of driving the associated steerable wheel independently of any other wheels of the working vehicle. In addition, this avoids the need for the pivotal coupling between the wheel hub and the axle to transmit rotation/drive, which simplifies the coupling.

Optionally, the controller is configured to implement feedback control using the steering angle signal to vary the control signal. Feedback control provides a more effective means for reaching the central steering angle position than alternatives, such as open-loop control.

A further aspect of the teachings provides a controller for a working vehicle steering system. Optionally, controller is configured to: a) receive a steering angle signal from a steering angle sensor, wherein the steering angle signal is indicative of a steering angle of one or more steerable wheels; b) determine from the steering angle signal whether the steering angle of the one or more steerable wheels is within a predetermined steering angle range; and c) when it is determined that the steering angle of the one or more steerable wheels is within the predetermined steering angle range, output a control signal to direct a steering actuation system to automatically move the one or more steerable wheels towards a central steering angle position.

Optionally, the controller is configured to determine whether a steering input is being actuated by a user or not, wherein the controller is configured to output the control signal when it is determined that the steering input is not being actuated by a user.

Optionally, the controller is configured not to output the control signal when it is determined that the steering input is being actuated by a user. In other words, the controller may be configured to only output the control signal when it is determined that the steering input is not being actuated by a user. In this way, the controller is configured not to override manual steering inputs so that the user retains control of the working vehicle steering system.

Optionally, the controller is configured to receive an input signal from the steering input. Optionally, the controller is configured to determine whether the steering input is being actuated by a user or not from the input signal. In other words, the steering input is an electronic steering input (e.g., an electronic button, switch, lever, joystick, or steering wheel). This provides a simple means of determining whether the steering input is being actuated (e.g., instead of having a sensor to detect movement of a mechanical steering input).

Optionally, the controller is configured to output the control signal when it is determined that the steering angle of the one or more steerable wheels has been within the predetermined steering angle range for more than a predetermined amount of time. In other words, the controller may implement a delay before automatically moving the one or more steerable wheels towards the central steering position. This may avoid unwanted movement to the central steering angle position (e.g., when a user stops steering temporarily).

Optionally, the controller is configured to output the control signal when it is determined that the steering angle has not changed and has been within the predetermined steering angle range for more than a predetermined amount of time. In other words, the controller may not output the control signal when the steering angle is changing (e.g., when passing through the predetermined steering angle range during a change from left to right steering or vice versa). In this way, the controller is configured not to override manual steering inputs so that the user retains control of the working vehicle steering system.

Optionally, the predetermined amount of time is 4 seconds or less, optionally 3 seconds or less, optionally 2 seconds or less, optionally 1 second or less. Such a predetermined amount of time provides sufficient delay to limit unwanted movement to the central steering angle position, whilst also being responsive enough to react before a user has to take corrective action to adjust the steering angle.

Optionally, the predetermined steering angle range is defined by steering angles of about 10 degrees or less from the central steering angle position, optionally steering angles of about 5 degrees or less from the central steering angle position, optionally steering angles of about 3 degrees or less from the central steering angle position, optionally steering angles of about 2 degrees or less from the central steering angle position.

In other words, the predetermined steering angle range spans the central steering angle position, and the predetermined steering angle range may comprise a leftmost angular position and a rightmost angular position, wherein the leftmost and rightmost angular positions are each about 10 degrees or less from the central steering angle position, optionally about 5 degrees or less from the central steering angle position, optionally about 3 degrees or less from the central steering angle position, optionally about 2 degrees or less from the central steering angle position. Such a predetermined steering angle range is small enough to avoid interfering with normal steering, which is typically carried out at greater steering angles.

Optionally, the controller is configured to output the control signal to one or more electric linear actuators, or to an electrohydraulic valve arrangement to actuate one or more hydraulic steering cylinders, and thereby automatically move the one or more steerable wheels towards the central steering angle.

Optionally, the controller is configured to determine whether the one or more steerable wheels are rotating or not, wherein the controller is configured to output the control signal when it is determined that one or more steerable wheels are rotating.

Optionally, the controller is configured not to output the control signal when it is determined that the one or more steerable wheels are not rotating. In other words, the controller may be configured to only output the control signal when it is determined that the one or more steerable wheels are rotating. In this way, "dry" steering may be avoided. This reduces the likelihood of damage to tyres of the one or more steerable wheels and/or other parts of the steering system.

Optionally, the controller is configured to receive a traction signal from a traction input of the working vehicle, and the controller is configured to determine whether the one or more steerable wheels are rotating or not based on the traction signal. This provides a simple means for determining that the one or more steerable wheels are rotating.

Optionally, the controller is configured to send an output signal to one or more prime movers for driving the one or more steerable wheels. Optionally, the controller is configured to determine whether the one or more steerable wheels are rotating or not based on the output signal. This provides a simple means for determining that the one or more steerable wheels are rotating.

Optionally, the controller is configured to receive a movement signal from a movement sensor (e.g., speedometer). Optionally, the controller is configured to determine whether the one or more steerable wheels are rotating or not based on the movement signal. This provides a simple means for determining that the one or more steerable wheels are rotating.

Optionally, the controller is configured to implement feedback control using the steering angle signal to vary the control signal. Feedback control provides a more effective means for reaching the central steering angle position than alternatives, such as open-loop control.

A further aspect of the teachings provides a controller for a working vehicle steering system. Optionally, controller is configured to: a) determine that it is desired to move one or more steerable wheels to a central steering angle position; and b) when it is determined that it is desired to move the one or more steerable wheels to the central steering angle position, output a control signal to one or more electric linear actuators, or to an electrohydraulic valve arrangement to actuate one or more hydraulic steering cylinders, and thereby automatically move the one or more steerable wheels towards the central steering angle.

Optionally, the controller is configured at step a) to receive an input signal which is indicative of a desire to move the one or more steerable wheels to the central steering angle position. Optionally, the input signal is a signal from a user input. Optionally, the controller is configured to determine that it is desired to move the one or more steerable wheels to the central steering angle position based on the input signal.

Optionally, the controller is configured to determine that it is desired to move the one or more steerable wheels to the central steering angle position when a steering mode input is actuated by a user to change a steering mode of the working vehicle steering system. It will be understood that it may be necessary to return the one or more steerable wheels to the central steering angle position when switching between different steering modes. Therefore, when the steering mode input is actuated, the controller may automatically centre the one or more steerable wheels so that the steering mode can be changed.

Optionally, the different steering modes comprise at least two of: a 2-wheel steering mode; a standard 4-wheel steering mode; and a 4-wheel crab steering mode.

Optionally, the controller is configured to determine that it is desired to move the one or more steerable wheels to the central steering angle position when a manually actuatable return-to-centre input is actuated by a user. Such an input provides a simple means of manually requesting centring of the one or more steerable wheels (e.g., when a user wants to move the working vehicle in a straight line, they can press the return-to-centre input instead of having to gradually adjust a steering input).

Optionally, the controller is configured to determine that it is desired to move the one or more steerable wheels to the central steering angle position when a steering input is actuated to start moving the one or more steerable wheels towards the central steering angle position. Typically, a steering input is actuated to return the one or more steerable wheels towards the central steering angle position after a turn has been made. Therefore, by detecting this and then automatically moving the one or more steerable wheels, the controller is able to assist the user to return to the central steering angle position with less effort.

Optionally, the controller is configured to determine whether the one or more steerable wheels are rotating or not, wherein the controller is configured to output the control signal when it is determined that one or more steerable wheels are rotating.

Optionally, the controller is configured not to output the control signal when it is determined that the one or more steerable wheels are not rotating. In other words, the controller may be configured to only output the control signal when it is determined that the one or more steerable wheels are rotating. In this way, "dry" steering may be avoided. This reduces the likelihood of damage to tyres of the one or more steerable wheels and/or other parts of the steering system.

Optionally, the controller is configured to receive a traction signal from a traction input of the working vehicle, and the controller is configured to determine whether the one or more steerable wheels are rotating or not based on the traction signal. This provides a simple means for determining that the one or more steerable wheels are rotating.

Optionally, the controller is configured to send an output signal to one or more prime movers for driving the one or more steerable wheels. Optionally, the controller is configured to determine whether the one or more steerable wheels are rotating or not based on the output signal. This provides a simple means for determining that the one or more steerable wheels are rotating.

Optionally, the controller is configured to receive a movement signal from a movement sensor (e.g., speedometer), and wherein the controller is configured to determine whether the one or more steerable wheels are rotating or not based on the movement signal. This provides a simple means for determining that the one or more steerable wheels are rotating.

Optionally, the controller is configured to implement feedback control using the steering angle signal to vary the control signal. Feedback control provides a more effective means for reaching the central steering angle position than alternatives, such as open-loop control.

A further aspect of the teachings provides a working vehicle comprising a working vehicle steering system as disclosed herein and/or a controller as disclosed herein. Such a working vehicle benefits from the advantages of the working vehicle steering system outlined above.

Optionally, the working vehicle is a mobile elevated work platform. Mobile elevated work platforms are often steered using steering buttons, levers or joysticks instead of a steering wheel. Such inputs may be harder to centre than a steering wheel (which gives a visual indication of central steering wheel position and/or is mechanically configured to return to a central position). Therefore, the benefits of the working vehicle steering system outlined above may be particularly beneficial for a mobile elevated work platform.

A further aspect of the teachings provides a method of automatically moving one or more steerable wheels towards a central steering angle position. Optionally, the method comprises: a) receiving a steering angle signal from a steering angle sensor; b) determining from the steering angle signal whether a steering angle of the one or more steerable wheels is within a predetermined steering angle range; and c) when it is determined that the steering angle of the one or more steerable wheels is within the predetermined steering angle range, automatically moving the one or more steerable wheels towards a central steering angle position.

In some working vehicles, it is difficult for a user to manually set the one or more steerable wheels to a central steer angle using a steering input (e.g., buttons or wheel). This may result in the user having to make repeated steering adjustments when trying to move the working vehicle in a straight line. This problem may be overcome by having a method which automatically moves the one or more steerable wheels towards a central steering angle position when the steering angle is within the predetermined steering angle range (e.g., an angle range spanning the central steering angle position).

Optionally, the method further comprises determining whether a steering input is being actuated by a user or not. Optionally, the method further comprises only performing step c) when it is determined that the steering input is not being actuated by a user. In this way, the method does not override manual steering inputs, so that the user retains control of the working vehicle steering system.

Optionally, the step of determining whether a steering input is being actuated by a user or not comprises receiving an input signal from the steering input. This provides a simple means of determining whether the steering input is being actuated (e.g., instead of having a sensor to detect movement of a mechanical steering input).

Optionally, step c) is performed when it is determined that the steering angle of the one or more steerable wheels has been within the predetermined steering angle range for more than a predetermined amount of time. In other words, there may be a delay before automatically moving the one or more steerable wheels towards the central steering position. This may avoid unwanted movement to the central steering angle position (e.g., when a user stops steering temporarily).

Optionally, step c) is performed when it is determined that the steering angle of the one or more steerable wheels has not changed and has been within the predetermined steering angle range for more than a predetermined amount of time. In other words, step c) may not be performed when the steering angle is changing (e.g., when passing through the predetermined steering angle range during a change from left to right steering or vice versa). In this way, the method may not override manual steering inputs so that the user retains control of the working vehicle steering system.

Optionally, the predetermined amount of time is 4 seconds or less, optionally 3 seconds or less, optionally 2 seconds or less, optionally 1 second or less. Such a predetermined amount of time provides sufficient delay to limit unwanted movement to the central steering angle position, whilst also being responsive enough to react before a user has to take corrective action to adjust the steering angle.

Optionally, the method comprises determining whether the one or more steerable wheels are rotating or not. Optionally, step c) is performed when it is determined that one or more steerable wheels are rotating.

Optionally, step c) is not performed when it is determined that the one or more steerable wheels are not rotating. In other words, step c) may only be performed when it is determined that the one or more steerable wheels are rotating. In this way, "dry" steering may be avoided. This reduces the likelihood of damage to tyres of the one or more steerable wheels and/or other parts of the steering system.

Optionally, the predetermined steering angle range is defined by steering angles of about 10 degrees or less from the central steering angle position, optionally steering angles of about 5 degrees or less from the central steering angle position, optionally steering angles of about 3 degrees or less from the central steering angle position, optionally steering angles of about 2 degrees or less from the central steering angle position.

In other words, the predetermined steering angle range spans the central steering angle position, and the predetermined steering angle range comprises a leftmost angular position and a rightmost angular position, wherein the leftmost and rightmost angular positions are each about 10 degrees or less from the central steering angle position, optionally about 5 degrees or less from the central steering angle position, optionally about 3 degrees or less from the central steering angle position, optionally about 2 degrees or less from the central steering angle position. Such a predetermined steering angle range is small enough to avoid interfering with normal steering, which is typically carried out at greater steering angles.

Optionally, step c) comprises implementing feedback control using the steering angle signal to automatically move the one or more steerable wheels to the central steering angle position. Feedback control provides a more effective means for reaching the central steering angle position than alternatives, such as open-loop control.

A further aspect of the teachings provides a method of automatically moving one or more steerable wheels towards a central steering angle position. Optionally, the method comprises: a) determining that it is desired to move the one or more steerable wheels to a central steering angle position; and b) when it is determined that it is desired to move the one or more steerable wheels to the central steering angle, actuating one or more electric linear actuators, or one or more hydraulic steering cylinders using an electrohydraulic valve arrangement, and thereby automatically moving the one or more steerable wheels towards the central steering angle position.

Optionally, step a) comprises receiving an input signal which is indicative of a desire to move the one or more steerable wheels to the central steering angle position. Optionally, the input signal is a signal from a user input. Optionally, the step a) comprises determining that it is desired to move the one or more steerable wheels to the central steering angle position based on the input signal.

Optionally, step a) comprises determining that it is desired to move the one or more steerable wheels to the central steering angle when a steering mode input is actuated by a user to change a steering mode of the working vehicle steering system. It will be understood that it may be necessary to return the one or more steerable wheels to the central steering angle position when switching between different steering modes. Therefore, when the steering mode input is actuated, step b) may be performed so that the steering mode can be changed.

Optionally, step a) comprises determining that it is desired to move the one or more steerable wheels to the central steering angle when a manually actuatable return-to-centre input is actuated by a user. Such an input provides a simple means of manually requesting centring of the one or more steerable wheels (e.g., when a user wants to move the working vehicle in a straight line, they can press the return-to-centre input instead of having to gradually adjust a steering input).

Optionally, step a) comprises determining that it is desired to move the one or more steerable wheels to the central steering angle when a steering input is actuated to start moving the one or more steerable wheels towards the central steering angle. Typically, a steering input is actuated to return the one or more steerable wheels towards the central steering angle position after a turn has been made. Therefore, by detecting this and then automatically moving the one or more steerable wheels, the method assists the user to return to the central steering angle position with less effort.

Optionally, the method comprises determining whether the one or more steerable wheels are rotating or not, and step b) is performed when it is determined that one or more steerable wheels are rotating.

Optionally, step b) is not performed when it is determined that the one or more steerable wheels are not rotating. In other words, step b) may only be performed when it is determined that the one or more steerable wheels are rotating. In this way, "dry" steering may be avoided. This reduces the likelihood of damage to tyres of the one or more steerable wheels and/or other parts of the steering system.

Optionally, step b) comprises implementing feedback control using the steering angle signal to automatically move the one or more steerable wheels to the central steering angle position. Feedback control provides a more effective means for reaching the central steering angle position than alternatives, such as open-loop control.

### BRIEF DESCRIPTION OF DRAWINGS

Embodiments will now be described by way of example only with reference to the accompanying figures, in which:
Figure 1 is a right-side view of a working vehicle according to an embodiment of the invention;
Figure 2 is a left-side view of the working vehicle of Figure 1;
Figure 3 is a plan view of an example trajectory of a working vehicle;
Figure 4 is a schematic diagram of a working vehicle steering system of the working vehicle of Figures 1 and 2;
Figure 5 is a plan view of an axle and associated components of the working vehicle steering system of Figure 4, with steerable wheels in a central steering angle position;
Figure 6 is a plan view of the axle and associated components of the working vehicle steering system of Figures 4 and 5, with the steerable wheels in a left steering angle position;
Figure 7 is a schematic diagram of a working vehicle steering system according to a further embodiment of the invention;
Figure 8 is a flow chart of a method of automatically moving one or more steerable wheels, according to an embodiment of the invention; and
Figure 9 is a flow chart of a method of automatically moving one or more steerable wheels, according to another embodiment of the invention.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

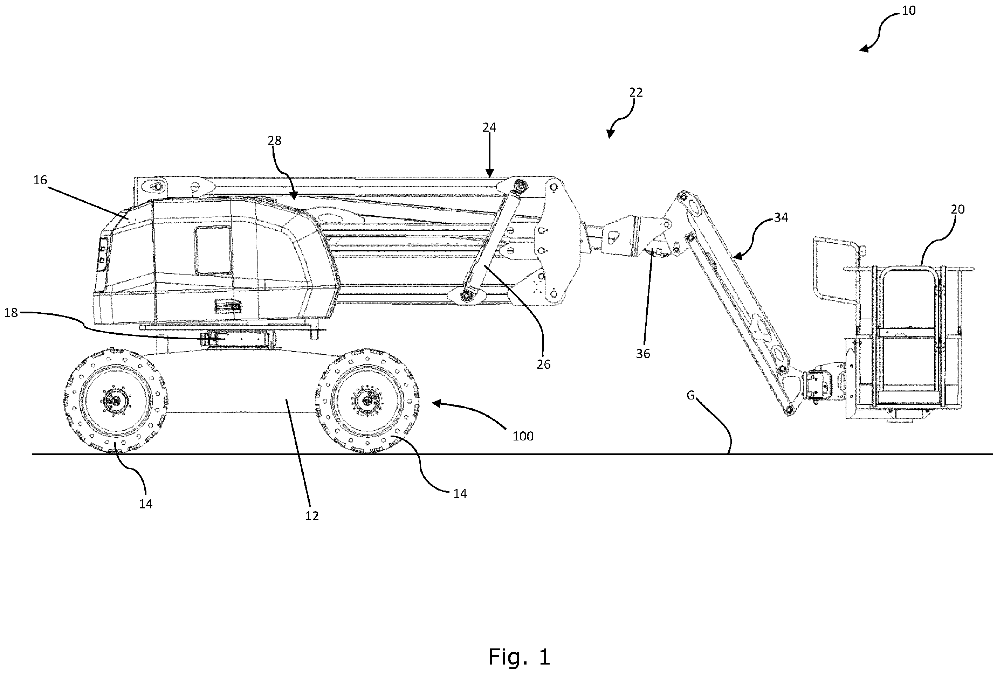

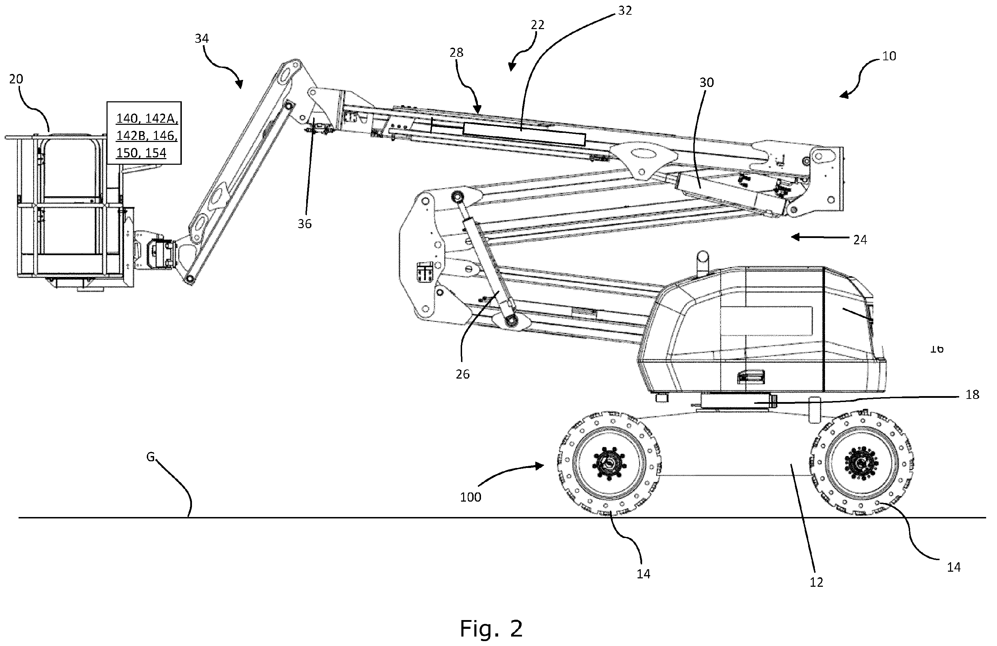

With reference to Figures 1 and 2, a working vehicle is indicated generally at 10. In the illustrated embodiment, the working vehicle 10 is a mobile elevated work platform. In alternative embodiments, the working vehicle is a different type of working vehicle (e.g. a telehandler, a backhoe loader, an excavator, a dumper, a skid-steer loader or the like).

The illustrated working vehicle 10 includes a chassis 12 with a driving arrangement for moving the working vehicle on a ground surface G. The driving arrangement may also be known as a ground-engaging propulsion arrangement. In the illustrated embodiment, the driving arrangement includes a plurality of wheels 14 (e.g. four wheels 14). In alternative embodiments, the driving arrangement has more or less than four wheels 14.

The working vehicle 10 has a superstructure 16 rotatably coupled to the chassis 12. A slewing motor 18 (e.g. an electric or hydraulic motor) is provided for rotating the superstructure 16 relative to the chassis 12.

The working vehicle 10 also has a basket 20 which is moveable relative to the superstructure 16 via a boom arrangement 22 coupled to the superstructure 16. The basket 20 is designed for receiving one or more people and/or objects (not shown). The working vehicle 10 is configured for moving the people and/or objects in the basket 20, via actuation of the boom arrangement 22, to a location remote from the ground surface G (e.g. an elevated location).

The boom arrangement 22 has an articulated boom arrangement 24 coupled to the superstructure 16, for raising the overall height of the boom arrangement 22. The articulated boom arrangement 24 is actuated by one or more articulated boom lifting actuators 26. In particular, extension of the articulated boom lifting actuator(s) 26 causes the articulated boom arrangement 24 to extend upwards, and retraction of the articulated boom lifting actuator(s) 26 causes the articulated boom arrangement 24 to retract downwards.

The boom arrangement 22 also includes a main boom 28 coupled to the articulated boom arrangement 24. The main boom 28 is actuated by a main boom lifting actuator 30. In particular, extension of the main boom lifting actuator 30 causes the main boom 28 to pivot upwards and retraction of the main boom lifting actuator 30 causes the main boom 28 to pivot downwards. The main boom 28 is of telescopic construction and a main boom extension actuator 32 is provided to control telescopic extension of the main boom 28.

The basket 20 is coupled to the main boom 28 via a jib boom arrangement 34. The working vehicle 10 is configured so that the jib boom arrangement 34 is pivotally coupled to the basket 20 and to the main boom 28. A levelling actuator 36 is provided so that the basket 20 remains substantially level regardless of the position of the main boom 28.

The illustrated mobile elevated work platform is of the kind commonly referred to as an "articulated boom" work platform but, in other embodiments, the mobile elevated work platform may be of the kind referred to as a "scissor lift", or another type of mobile elevated work platform. For example, in alternative embodiments, the working vehicle 10 has a different type of boom arrangement 22. For example: the main boom 28 may be connected directly to the basket 20 (i.e. the jib boom arrangement 34 may be omitted); the main boom 28 may be connected directly to the superstructure 16 (i.e. the articulated boom arrangement 24 may be omitted); the articulated boom arrangement 24 may be a scissor-type arrangement; the main boom 28 may not be telescopic; and/or the main boom 28 and jib boom arrangement 34 may be omitted and the basket 20 may be connected directly to the articulated boom arrangement 24.

The working vehicle 10 has various user controls 140, 142A, 142B, 146, 150, 154 which can be activated by a user to control functions of the working vehicle 10. These user controls may be collocated on one or more control panels, as illustrated schematically on Figure 2. In the illustrated embodiment, the user controls are positioned on the basket 20. However, at least some of the user controls may be positioned on the chassis 12 and/or superstructure 16 in other embodiments.

In the illustrated embodiment, the user controls include a traction input 154 to instruct driving of the wheels 14. For example, the traction input 154 may include a lever or joystick. Movement of the lever or joystick in a first direction may instruct driving of the wheels 14 to propel the working vehicle 10 forwards. Movement of the lever or joystick in a second direction may instruct driving of the wheels 14 to propel the working vehicle 10 backwards.

In the illustrated embodiment, the user controls also include a steering input 140 to instruct steering of at least one of the wheels 14 (i.e., at least one "steerable wheel"). In the illustrated embodiment, the steering input 140 is provided in the form of left and right steering buttons 142A, 142B. When the user presses the left steering button 142A, the steerable wheel(s) 14 turn left. Similarly, when the user presses the right steering button, the steerable wheel(s) 14 turn right.

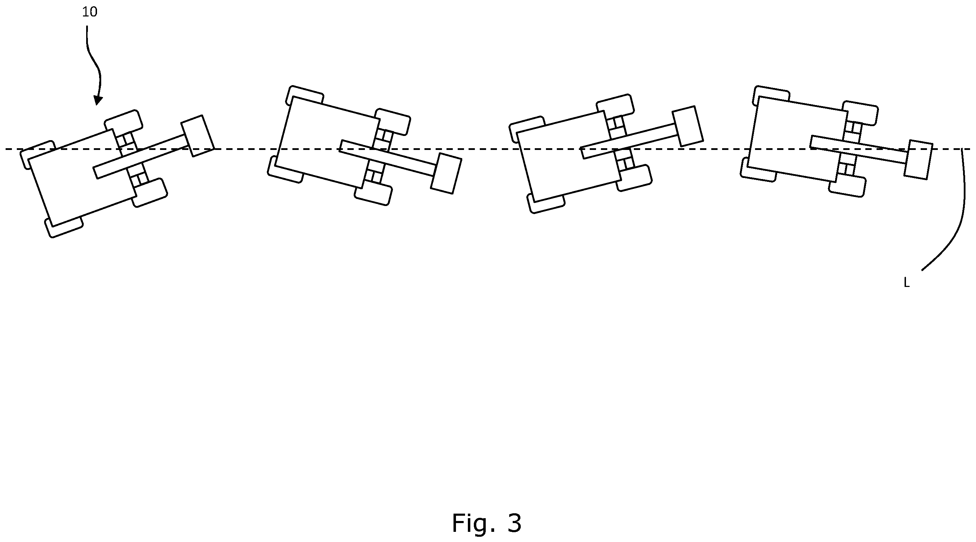

It will be understood that the traction input 154 and left and right steering buttons 142A, 142B will typically be operated simultaneously in order to move the working vehicle 10. However, it may be difficult to move the working vehicle 10 in a straight line using such inputs 154, 142A, 142B, as the left and right steering buttons 142A, 142B provide no visual indication of the steering angle of the steerable wheel(s) 14. Therefore, the user may have to continually adjust steering of the working vehicle 10 using the left and right steering buttons 142A, 142B, in order to follow a straight line L (e.g., as illustrated in Figure 3).

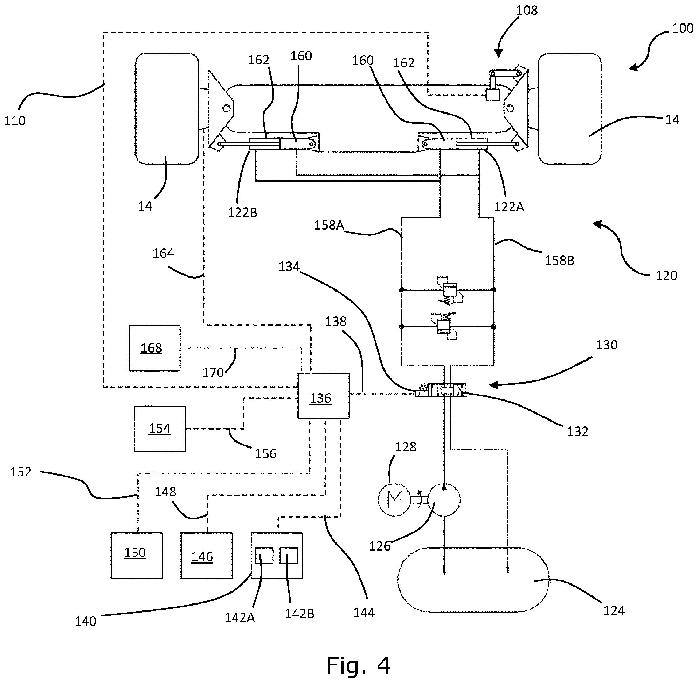

Referring now to Figures 4 to 6, a working vehicle steering system of the working vehicle 10 is indicated at 100.

The working vehicle steering system 100 has one or more steerable wheels 14 (i.e., one or more of the wheels 14 of the working vehicle 10 described above). In the illustrated embodiment, a pair of steerable wheels (i.e. a left steerable wheel 14 and a right steerable wheel 14), is provided, but there may be a single steerable wheel 14 or more than two steerable wheels 14 in other embodiments.

In the illustrated embodiment, the steerable wheels 14 are each carried by a respective wheel hub 102 which is pivotally mounted to an axle 104. The axle 104 may be a front axle or a rear axle of the working vehicle 10. The axle 104 may be coupled to the chassis 12 (e.g., via bolting the axle to the chassis 12), or may be an integral part of the chassis 12. Although only a single axle 104 is illustrated, there may be a pair of axles (i.e., a front axle 104 and a rear axle 104), which each have the illustrated configuration of Figures 4 to 6. In other words, all four wheels 14 of the working vehicle 10 may be steerable. Alternatively, one of the front and rear sets of wheels 14 may be fixed (i.e., not steerable).

In some embodiments, each of the steerable wheels 14 are mounted (e.g., via the respective wheel hub 102) to a swing arm or half axle instead of having left and right steerable wheels 14 mounted to the same axle 104, as illustrated.

In the illustrated embodiment, each wheel hub 102 has an electric traction motor 106 for driving the associated steerable wheel 14 (e.g., in response to actuation of the traction input 154). In other embodiments, the wheels 14 may be driven by an alternative prime mover. For example, a common electric traction motor or an internal combustion engine may be provided for driving multiple wheels 14 via a drivetrain (e.g., including one or more transmission components, driveshafts, differentials, etc.).

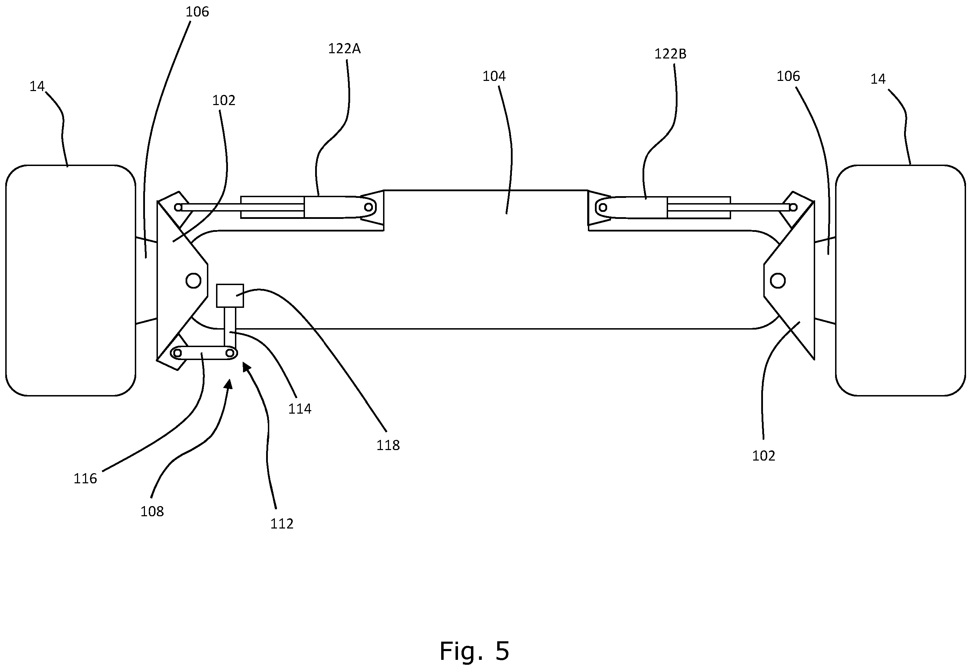

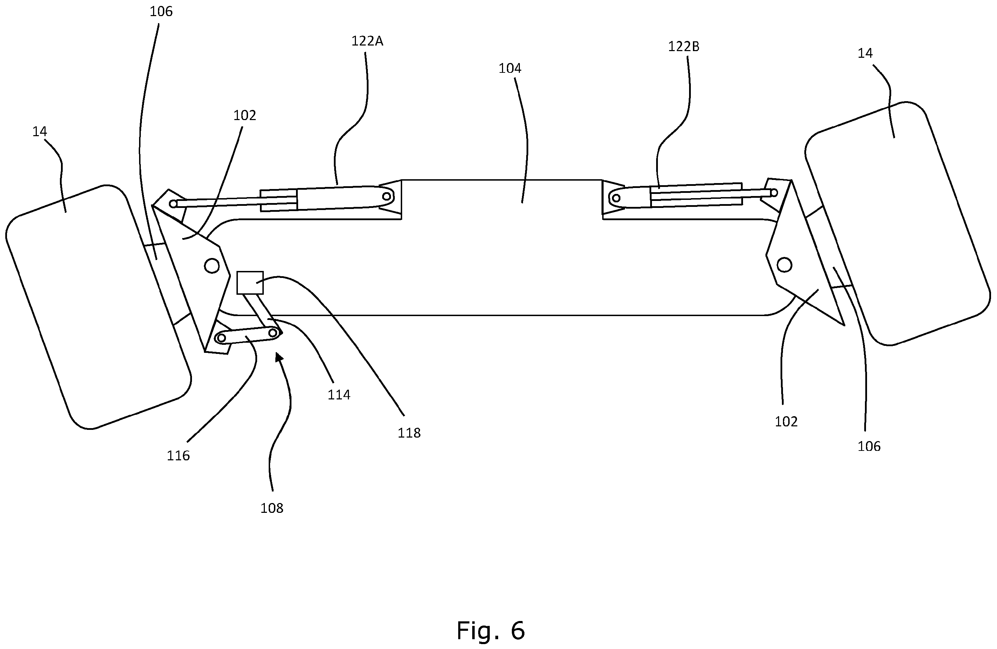

As will be described in more detail below, the working vehicle steering system 100 also has a steering actuation system 120 which is configured to move the steerable wheels 14 between a range of steering angles. For example, Figures 4 and 5 illustrate the steerable wheels 14 in a central steering angle position, whereas Figure 6 illustrates the steerable wheels 14 at a left steering angle position which is angularly offset from the central steering angle position.

In the illustrated embodiment, the steering actuation system 120 includes one or more hydraulic steering cylinders 122A, 122B which are configured to move the steerable wheels 14 between the range of steering angles. As illustrated in Figure 4, the steering actuation system 120 also has: a hydraulic fluid reservoir 124; a pump 126 configured to supply a flow of hydraulic fluid from the hydraulic fluid reservoir 124 to the hydraulic steering cylinder(s) 122A, 122B; and a valve arrangement 130 configured to control the flow of hydraulic fluid to and from the hydraulic steering cylinder(s) 122A, 122B. In the illustrated embodiment, the pump 126 is driven by an electric pump motor 128.

In the illustrated embodiment, the one or more hydraulic steering cylinders include a left hydraulic steering cylinder 122A configured to move the left steerable wheel 14 and a right hydraulic steering cylinder 122B configured to move the right steerable wheel 14.

In particular, the left hydraulic steering cylinder 122A has a first end which is mounted to the axle 104 and a second end which is mounted to the wheel hub 102 of the left steerable wheel 14. Similarly, the right hydraulic steering cylinder 122B has a first end which is mounted to the axle 104 and a second end which is mounted to the wheel hub 102 of the right steerable wheel 14. In this way, extension and retraction of the hydraulic steering cylinders 122A, 122B causes pivoting of the respective wheel hub 102 and steerable wheel 14 relative to the axle 104.

The left and right hydraulic steering cylinders 122A, 122B are actuated together in order to steer the left and right steerable wheels 14 in the same direction. In particular, as one of the hydraulic steering cylinders 122A, 122B extends, the other hydraulic steering cylinder 122A, 122B retracts in order to pivot the left and right steerable wheels 14 in the same direction.

In more detail, a head side chamber 160 of the left hydraulic steering cylinder 122A and a rod side chamber 162 of the right hydraulic steering cylinder 122B are connected to a first hydraulic supply line 158A. Similarly, a head side chamber 160 of the right hydraulic steering cylinder 122B and a rod side chamber 162 of the left hydraulic steering cylinder 122A are connected to a second hydraulic supply line 158B. The first and second hydraulic supply lines 158A, 158B are coupled to the valve arrangement 130 so that one of the hydraulic supply lines 158A, 158B can be pressurised by the pump 126, while the other of the hydraulic supply lines 158A, 158B is connected to the hydraulic fluid reservoir 124.

When the first hydraulic supply line 158A is connected to the pump 126 and the second hydraulic supply line 158B is connected to the hydraulic fluid reservoir 124, hydraulic fluid is supplied from the first hydraulic supply line 158A to the head side chamber 160 of the left hydraulic steering cylinder 122A and the rod side chamber 162 of the right hydraulic steering cylinder 122B. At the same time, hydraulic fluid leaves the rod side chamber 162 of the left hydraulic steering cylinder 122A and the head side chamber 160 of the right hydraulic steering cylinder 122B, and returns to the hydraulic fluid reservoir 124. This causes the left hydraulic steering cylinder 122A to extend and the right hydraulic steering cylinder 122B to retract.

When the second hydraulic supply line 158B is connected to the pump 126 and the first hydraulic supply line 158A is connected to the hydraulic fluid reservoir 124, the hydraulic steering cylinders 122A, 122B move in the opposite direction (i.e., the left hydraulic steering cylinder 122A retracts while the right hydraulic steering cylinder 122B extends).

In alternative embodiments, there may be a double-acting hydraulic steering cylinder configured to simultaneously move both the left and right steerable wheels 14.

In the illustrated embodiment, the valve arrangement 130 is an electrohydraulic valve arrangement. This provides greater control flexibility than alternatives such as mechanical or pilot-operated hydraulic valves.

In the illustrated embodiment, the electrohydraulic valve arrangement 130 includes a solenoid-operated directional control valve 132. This provides a simple means of controlling flow to/from the hydraulic steering cylinders 122A, 122B using electrical control signals (i.e., signals sent to a solenoid 134 of the solenoid-operated directional control valve 132). In other words, this allows automatic control of the steering actuation system 120 using a controller 136, as will be described in more detail below.

The working vehicle steering system 100 also includes a steering angle sensor 108 which is configured to provide a steering angle signal 110 indicative of the steering angle of the steerable wheels 14. As best illustrated in Figures 5 and 6, the steering angle sensor 108 includes a linkage 112 coupled between the left wheel hub 102 and the axle 104. The steering angle sensor 108 also includes a position sensor 118 configured to output the steering angle signal 110 based on a position of the linkage 112. In particular, the linkage 112 includes a first link 114 which is coupled to the position sensor 120 so that the position sensor 120 can detect angular displacement of the first link 114. The linkage 112 also includes a second link 116 which is pivotally coupled to the first link 114 and to the left wheel hub 102. In this way, as the left wheel hub 102 pivots relative to the axle 104 (as illustrated in Figure 6) the position of the first link 114 changes. This change in position can be detected by the position sensor 118 to determine the steering angle.

In alternative embodiments, the steering angle sensor 108 may be a piston displacement sensor configured to output the steering angle signal based on a position of a piston of one of the hydraulic steering cylinders 122A, 122B. Alternatively, any other suitable angle sensor may be used.

As mentioned briefly above, the working vehicle steering system 100 includes a controller 136 which is configured to actuate the steering actuation system 120. The controller 136 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 136 may include an associated memory or the memory may be located locally to the controller 136 or remotely. The memory may be a non-volatile flash memory.

The controller 136 is configured to output a control signal 138 to direct the steering actuation system 120 to move the steerable wheels 14. In particular, the controller 136 is configured to output the control signal 138 to the electrohydraulic valve arrangement 130 (specifically, to the solenoid 134 of the solenoid-operated directional control valve 132). This actuates the hydraulic steering cylinders 122A, 122B and thereby moves the steerable wheels 14. The controller 136 may also output a pump driving signal to the electric pump motor 128 to drive the pump 126, to provide the flow of hydraulic fluid required to actuate the hydraulic steering cylinders 122A, 122B.

The steering input 140 described above may be used to manually actuate the steering actuation system 120. In particular, the steering input 140 may send a steering signal 144 to the controller 136 when the steering input 140 is actuated, and the controller 136 may set the control signal 138 based on the steering signal 144 to move the steerable wheels 14 as desired. In the illustrated embodiment, the steering input 140 is an electronic steering input (e.g., comprising left and right electronic steering buttons 142A, 142B). In other embodiments, the steering input 140 is a different kind of electronic steering input (e.g., an electronic switch, lever, joystick, or drive-by-wire steering wheel). In other embodiments, the steering input 140 may be a mechanical steering input.

The controller 136 is also configured to set the control signal 138 for automatic movement of the steerable wheels 14, as will be described in more detail below.

In some embodiments, the controller 136 is configured to receive the steering angle signal 110 from the steering angle sensor 108, and to determine from the steering angle signal 110 whether the steering angle of the steerable wheels 14 is within a predetermined steering angle range. When it is determined that the steering angle of the steerable wheels 14 is within the predetermined steering angle range, the controller 136 may be configured to output the control signal 138 to direct the steering actuation system 120 to automatically move the steerable wheels 14 towards the central steering angle position (illustrated in Figure 5). This may overcome the difficulties associated with driving the working vehicle 10 in a straight line, as described above in relation to Figure 3.

In some embodiments, the controller 136 is configured to determine whether the steering input 140 is being actuated by a user or not. For example, the controller 136 may be configured to determine whether the steering input 140 is being actuated by a user or not based on the steering signal 144 (e.g., based on a change in the steering signal 144).

The controller 136 may be configured to set the control signal 138 to automatically move the steerable wheels 14 when it is determined that the steering input 140 is not being actuated by a user. The controller 136 may be configured not to set the control signal 138 to automatically move the steerable wheels 14 when it is determined that the steering input 140 is being actuated by a user. In other words, the controller 136 may be configured to only set the control signal 138 to automatically move the steerable wheels 14 to the central steering angle position when it is determined that the steering input 140 is not being actuated by a user. Otherwise, the control signal 138 may be set based on the steering signal 144. In this way, the controller 136 is configured not to override manual steering inputs so that the user retains control of the working vehicle steering system 100.

In some embodiments, the controller 136 is configured to set the control signal 138 to automatically move the steerable wheels 14 to the central steering angle position when it is determined that the steering angle of the steerable wheels 14 has been within the predetermined steering angle range for more than a predetermined amount of time. In other words, the controller 136 may implement a delay before automatically moving the steerable wheels 14 towards the central steering angle position. This may avoid unwanted movement to the central steering angle position (e.g., when a user stops manually steering temporarily). The predetermined amount of time may be 4 seconds or less (e.g. 3 seconds or less, e.g. 2 seconds or less, e.g. 1 second or less). This may provide sufficient delay to limit unwanted movement to the central steering angle position, whilst also being responsive enough to react before a user has to take corrective action to adjust the steering angle.

In some embodiments, the controller 136 is configured to set the control signal 138 to automatically move the steerable wheels 14 to the central steering angle position when it is determined that the steering angle has not changed and has been within the predetermined steering angle range for more than a predetermined amount of time. In other words, the controller 136 may not output the control signal 138 to automatically move the steerable wheels 14 to the central steering angle position when the steering angle is changing (e.g., when passing through the predetermined steering angle range during a change from left to right steering or vice versa). In this way, the controller 136 is configured not to override manual steering inputs (i.e., from the steering input 140), so that the user retains control of the working vehicle steering system 100. The predetermined amount of time may be 4 seconds or less (e.g. 3 seconds or less, e.g. 2 seconds or less, e.g. 1 second or less). This may provide sufficient delay to limit unwanted movement to the central steering angle position, whilst also being responsive enough to react before a user has to take corrective action to adjust the steering angle.

In some embodiments, the predetermined steering angle range is defined by steering angles of about 10 degrees or less from the central steering angle position (e.g. steering angles of about 5 degrees or less from the central steering angle position, e.g. steering angles of about 3 degrees or less from the central steering angle position, e.g. steering angles of about 2 degrees or less from the central steering angle position). In other words, the predetermined steering angle range may span the central steering angle position. Put another way, the predetermined steering angle range may include a leftmost angular position and a rightmost angular position, and the leftmost and rightmost angular positions may each be about 10 degrees or less from the central steering angle position (e.g. about 5 degrees or less from the central steering angle position, e.g. about 3 degrees or less from the central steering angle position, e.g. about 2 degrees or less from the central steering angle position). Such a predetermined steering angle range is small enough to avoid interfering with normal steering, which is typically carried out at greater steering angles.

In the embodiments described above, the controller 136 may be configured to determine that it is desired to move the steerable wheels 14 to the central steering angle position when the steering angle is within the predetermined steering angle range.

In the embodiments described above, the steerable wheels 14 are automatically moved to the central steering angle position when the steering angle is within a predetermined steering angle range. However, it will be understood that in some embodiments the steerable wheels 14 may be automatically moved to the central steering angle position based on another condition.

In some embodiments, the working vehicle steering system 100 has a steering mode input 146 for selecting different steering modes of the working vehicle steering system 100. For example, the different steering modes may include at least two of: a 2-wheel steering mode; a standard 4-wheel steering mode; and a 4-wheel crab steering mode. The steering mode input 146 may send a steering mode signal 148 to the controller 136 to instruct the controller 136 to change steering mode.

It will be understood that it may be necessary to return the steerable wheels 14 to the central steering angle position when switching between different steering modes.

Therefore, in such embodiments, the controller 136 may be configured to determine that it is desired to move the steerable wheels 14 to the central steering angle position when the steering mode input 146 is actuated by a user to change the steering mode of the working vehicle steering system 100. The controller 136 may then output the control signal 138 to automatically move the steerable wheels 14 towards the central steering angle position, in the same way as described above.

In some embodiments, the working vehicle steering system 100 has a manually actuatable return-to-centre input 150. The return-to-centre input 150 may send a manual return signal 152 to the controller 136. The controller 136 may be configured to determine that it is desired to move the steerable wheels 14 to the central steering angle position when the return-to-centre input 150 is actuated by a user (e.g., when the manual return signal 152 is received). The controller 136 may then output the control signal 138 to automatically move the steerable wheels 14 towards the central steering angle position, in the same way as described above.

In some embodiments, the controller 136 is configured to determine that it is desired to move the steerable wheels 14 to the central steering angle position when the steering input 140 is actuated to start moving the steerable wheels 14 towards the central steering angle position. In other words, the controller 136 may be configured to determine that it is desired to move the steerable wheels 14 to the central steering angle position when the steering angle is reducing. Typically, the steering input 140 would be actuated to return the steerable wheels 14 towards the central steering angle position after a turn has been made. Therefore, by detecting this and then automatically moving the steerable wheels 14 to the central steering angle position, the controller 136 is able to assist the user to return to the central steering angle position with less effort.

In other embodiments, the controller 136 is configured to determine that it is desired to move the steerable wheels 14 to the central steering angle position via any other suitable means or logic. For example, the controller 136 may be configured to receive an alternative input signal which is indicative of a desire to move the steerable wheels 14 to the central steering angle position. The alternative input signal may be a signal from a user input or a signal from a sensor. The controller 136 may be configured to determine that it is desired to move the steerable wheels 14 to the central steering angle position based on the alternative input signal.

In any of the embodiments described above, the controller 136 may be configured to determine whether the steerable wheels 14 are rotating or not, and to output the control signal 138 to automatically move the steerable wheels 14 to the central steering angle position when it is determined that steerable wheels 14 are rotating. In particular, the controller 136 may be configured not to output the control signal 138 to automatically move the steerable wheels 14 when it is determined that the steerable wheels 14 are not rotating. In other words, the controller 136 may be configured to only output the control signal 138 to automatically move the steerable wheels 14 when it is determined that the steerable wheels 14 are rotating. In this way, "dry" steering may be avoided. This reduces the likelihood of damage to tyres of the steerable wheels 14 and/or other parts of the working vehicle steering system 100.

In this context, the steerable wheels 14 are considered to be "rotating" when they are caused to rotate either: by a rotational force applied to the steerable wheels 14 by a prime mover; or by coasting along the ground surface G (e.g., in a 2-wheel driving mode in which at least some of the steerable wheels 14 are not driven by the prime mover).

The traction input 154 described above may be used to determine whether the steerable wheels 14 are rotating or not. In particular, the traction input 154 may send a traction signal 156 to the controller 136. The controller 136 may be configured to receive the traction signal 156 and to determine whether the steerable wheels 14 are rotating or not based on the traction signal 156.

Alternatively, the controller 136 may be configured to determine whether the steerable wheels 14 are rotating or not based on an output signal 164 set by the controller 136 (i.e., an output signal 164 for driving actuation of the electric traction motor(s) 106 or other prime mover(s)).

Alternatively, the controller 136 may be configured to receive a movement signal from a movement sensor such as a speedometer (not shown), and the controller 136 may be configured to determine whether the steerable wheels 14 are rotating or not based on the movement signal.

In some embodiments, the working vehicle steering system 100 has a manually override input 168. The manual override input 168 may send an override signal 170 to the controller 136. The controller 136 may be configured not to output the control signal 138 to direct the steering actuation system 120 to automatically move the one or more steerable wheels 14 towards the central steering angle position when the manual override input 168 is activated by a user (i.e., when the override signal 170 is received). In this way, the operator of the working vehicle 10 is able to switch off the automatic movement of the steerable wheels 14 when desired (e.g., when full manual control of steering is desired).

In any of the embodiments described above, the controller 136 may be configured to implement feedback control using the steering angle signal 110 to vary the control signal 138 for automatically moving the steerable wheels 14 to the central steering angle position. For example, where the steering angle signal 110 indicates a positive steering angle (either in the left or right direction), the controller 136 may set the control signal 138 to reduce the steering angle until the steering angle signal 110 reaches zero. Various known feedback control techniques may be used to tune the response (e.g., to avoid overshooting the central steering angle position and/or to optimise the reaction time).

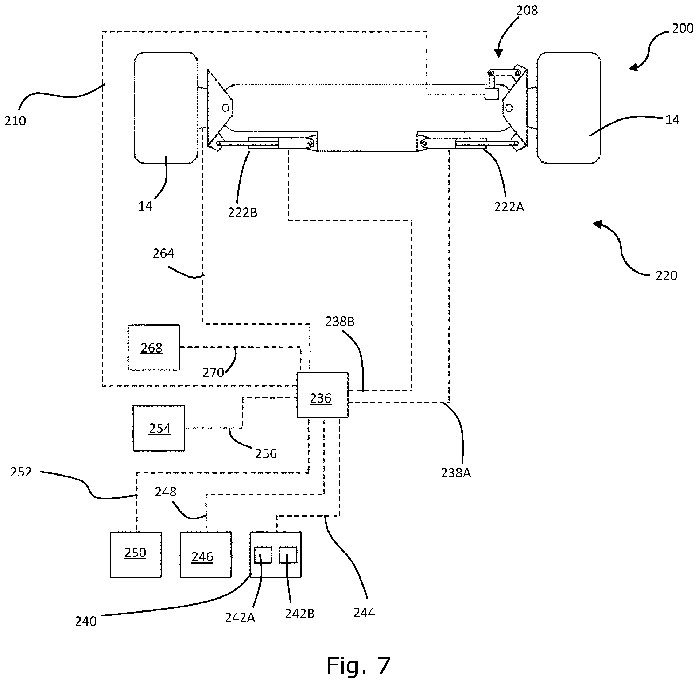

Referring now to Figure 7, an alternative working vehicle steering system is indicated at 200. In Figure 7, features which are common to those of Figures 4 to 6 are given the prefix "2" instead of "1", and only differences will be described in detail.

In the embodiment of Figure 7, the steering actuation system 220 has a different configuration to that of Figures 4 to 6. In particular, the steering actuation system 220 includes one or more electric linear actuators 222A, 222B instead of hydraulic cylinders and an associated hydraulic circuit.

In the embodiment of Figure 7, there are two electric linear actuators 222A, 222B, but in other embodiments there may be a single electric linear actuator instead (e.g., a double-acting electric linear actuator).

In the embodiment of Figure 7, the controller 236 sends the control signals 238A, 238B directly to the respective electric linear actuators 222A, 222B.

Apart from the differences in the steering actuation system described above, the working vehicle steering system 200 of Figure 7 may function in the same way as the previously described working vehicle steering system 100 of Figures 4 to 6.

In other embodiments, the steering actuation system may have a different configuration to the steering actuation systems 120, 220 illustrated in Figures 4 to 7. For example, actuators other than electric linear actuators or hydraulic cylinders actuated by an electrohydraulic valve arrangement may be used. For example, one or more electric motors may be used to pivot a wheel hub relative to an axle in order to steer the one or more steerable wheels 14. Alternatively, one or more hydraulic cylinders may be actuated by a mechanical valve arrangement having a mechanical input (e.g., a mechanical steering orbitrol controlled by a steering column) and the control system may be configured to move the mechanical input (e.g., using an electric motor to rotate a steering column).

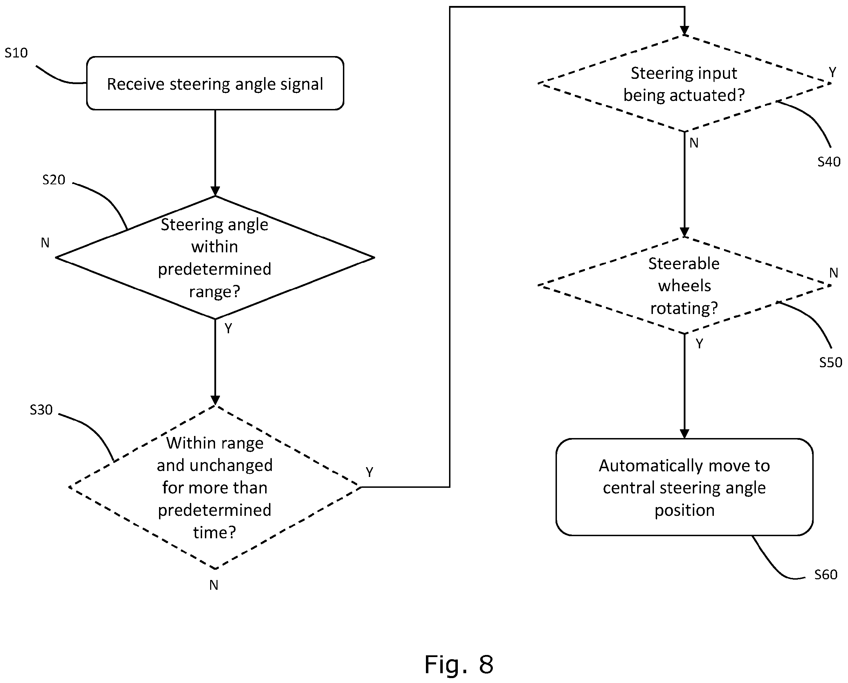

Referring now to Figure 8, a method of automatically moving one or more steerable wheels 14 in a working vehicle steering system 100 towards a central steering angle position is illustrated as a flow chart. The method comprises the following steps:
a) receiving a steering angle signal 110 from a steering angle sensor 108 (at step S10);
b) determining from the steering angle signal 110 whether a steering angle of the one or more steerable wheels 14 is within a predetermined steering angle range (at step S20); and
c) when it is determined that the steering angle of the one or more steerable wheels 14 is within the predetermined steering angle range, automatically moving the one or more steerable wheels 14 towards a central steering angle position (at step S60).

In some embodiments, step c) is performed when it is determined that the steering angle of the one or more steerable wheels 14 has been within the predetermined steering angle range for more than a predetermined amount of time (at step S30). In other words, there may be a delay before automatically moving the one or more steerable wheels 14 towards the central steering position. This may avoid unwanted movement to the central steering angle position (e.g., when a user stops manually steering temporarily).

In some embodiments, step c) is performed when it is determined that the steering angle of the one or more steerable wheels 14 has not changed and has been within the predetermined steering angle range for more than a predetermined amount of time (at step S30). In other words, step c) may not be performed when the steering angle is changing (e.g., when passing through the predetermined steering angle range during a change from left to right steering or vice versa). In this way, the method does not override manual steering inputs 144 so that the user retains control of the working vehicle steering system 100.

In some embodiments, the predetermined amount of time is 4 seconds or less, optionally 3 seconds or less, optionally 2 seconds or less, optionally 1 second or less. Such a predetermined amount of time provides sufficient delay to limit unwanted movement to the central steering angle position, whilst also being responsive enough to react before a user has to take corrective action to adjust the steering angle.

The method may further comprise determining whether a steering input 140 is being actuated by a user or not (at step S40), and only performing step c) when it is determined that the steering input 140 is not being actuated by a user. In this way, the method does not override manual steering inputs 144, so that the user retains control of the working vehicle steering system 100.

The step of determining whether the steering input 140 is being actuated by a user or not (S40) may comprise receiving an input signal 144 from the steering input 140.

In some embodiments, the method comprises determining whether the one or more steerable wheels 14 are rotating or not (at step S50), and step c) is performed when it is determined that one or more steerable wheels 14 are rotating. In some embodiments, step c) is not performed when it is determined that the one or more steerable wheels 14 are not rotating. In other words, step c) may be performed only when it is determined that the one or more steerable wheels 14 are rotating. In this way, "dry" steering may be avoided.

In some embodiments, the predetermined steering angle range is defined by steering angles of about 10 degrees or less from the central steering angle position, optionally steering angles of about 5 degrees or less from the central steering angle position, optionally steering angles of about 3 degrees or less from the central steering angle position, optionally steering angles of about 2 degrees or less from the central steering angle position.

In some embodiments, step c) comprises implementing feedback control using the steering angle signal 110 to automatically move the one or more steerable wheels 14 to the central steering angle position.

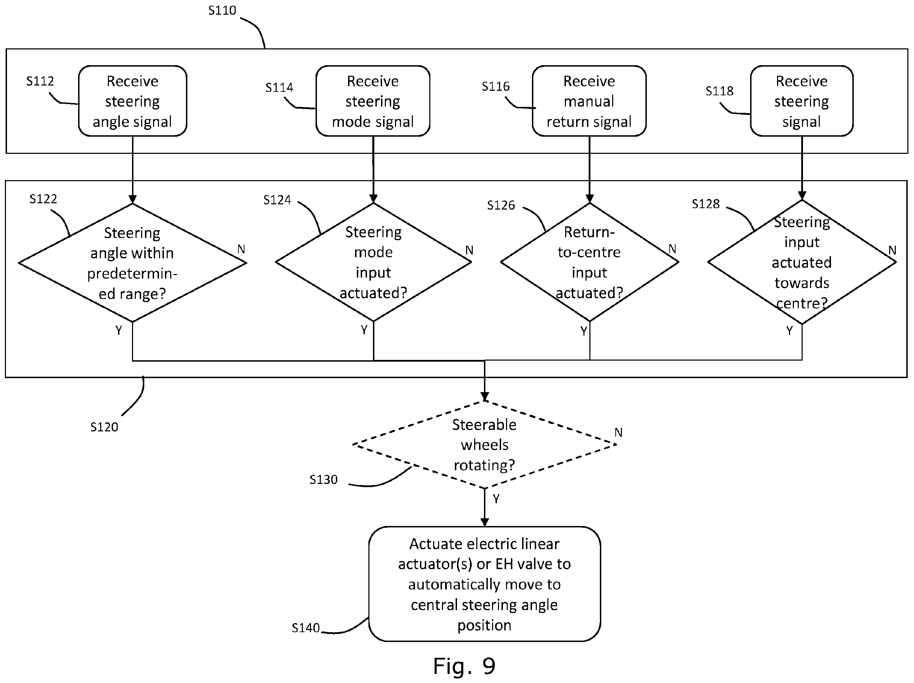

Referring now to Figure 9, a method of automatically moving one or more steerable wheels 14 of a working vehicle steering system 100 towards a central steering angle position is illustrated as a flow chart. The method comprises the following steps:
a) determining that it is desired to move the one or more steerable wheels 14 to a central steering angle position (at step S120); and
b) when it is determined that it is desired to move the one or more steerable wheels 14 to the central steering angle, actuating one or more electric linear actuators 222A, 222B, or one or more hydraulic steering cylinders 122A, 122B using an electrohydraulic valve arrangement 130, and thereby automatically moving the one or more steerable wheels 14 towards the central steering angle (at step S140).

In some embodiments, step a) comprises receiving an input signal 110, 144, 148, 152 which is indicative of a desire to move the one or more steerable wheels 14 to the central steering angle position (at step S110). The input signal 144, 148, 152 may be a signal from a user input 140, 146, 150.

In some embodiments, step a) comprises determining that it is desired to move the one or more steerable wheels 14 to the central steering angle when a steering angle of the one or more steerable wheels 14 is within a predetermined steering angle range (at step S122). This may involve implementing steps S20 and optionally S30 and S40 of Figure 8, as described above. In such embodiments, a steering angle signal 110 may be received from a steering angle sensor 108 (at step S112) in order to determine whether the steering angle is within the predetermined steering angle range.

In some embodiments, step a) comprises determining that it is desired to move the one or more steerable wheels 14 to the central steering angle when a steering mode input 146 is actuated by a user to change a steering mode of the working vehicle steering system 100 (at step S124). In such embodiments, a steering mode signal 148 may be received from the steering mode input 146 when the steering mode input 146 is actuated by the user (at step S114).

In some embodiments, step a) comprises determining that it is desired to move the one or more steerable wheels 14 to the central steering angle when a manually actuatable return-to-centre input 150 is actuated by a user (at step 126). In such embodiments, a manual return signal 152 may be received from the return-to-centre input 150 when the return-to-centre input 150 is actuated by the user (at step S116).

In some embodiments, step a) comprises determining that it is desired to move the one or more steerable wheels 14 to the central steering angle when a steering input 140 is actuated to start moving the one or more steerable wheels 14 towards the central steering angle (at step 128). In such embodiments, a steering signal 144 may be received from the steering input 140 when the steering input is actuated (at step 118).

In some embodiments, the method comprises determining whether the one or more steerable wheels 14 are rotating or not (at step S130), and step b) is performed when it is determined that the one or more steerable wheels 14 are rotating. In some embodiments, step b) is not performed when it is determined that the one or more steerable wheels 14 are not rotating. In other words, step b) may be performed only when it is determined that the one or more steerable wheels 14 are rotating. In this way, "dry" steering may be avoided.

In some embodiments, step b) comprises implementing feedback control using a steering angle signal 110 to automatically move the one or more steerable wheels 14 to the central steering angle position.

The one or more embodiments are described above by way of example only and it will be appreciated that the variations are possible without departing from the scope of protection afforded by the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. A working vehicle steering system comprising:
one or more steerable wheels;
a steering actuation system configured to move the one or more steerable wheels between a range of steering angles;
a steering angle sensor configured to provide a steering angle signal indicative of the steering angle of the one or more steerable wheels; and
a controller configured to:
a) receive the steering angle signal from the steering angle sensor;
b) determine from the steering angle signal whether the steering angle of the one or more steerable wheels is within a predetermined steering angle range; and
c) when it is determined that the steering angle of the one or more steerable wheels is within the predetermined steering angle range, output a control signal to direct the steering actuation system to automatically move the one or more steerable wheels towards a central steering angle position.

2. The working vehicle steering system of claim 1, comprising a steering input for manually controlling the steering actuation system, wherein the controller is configured to determine whether the steering input is being actuated by a user or not, and wherein the controller is configured to output the control signal when it is determined that the steering input is not being actuated by a user.

3. The working vehicle steering system of claim 1 or 2, wherein the controller is configured to output the control signal when it is determined that the steering angle of the one or more steerable wheels has been within the predetermined steering angle range for more than a predetermined amount of time; optionally, wherein the controller is configured to output the control signal when it is determined that the steering angle has not changed and has been within the predetermined steering angle range for more than a predetermined amount of time; and/or optionally, wherein the predetermined amount of time is 4 seconds or less, optionally 3 seconds or less, optionally 2 seconds or less, optionally 1 second or less.

4. The working vehicle steering system of claim, wherein the predetermined steering angle range is defined by steering angles steering angles of about 10 degrees or less from the central steering angle position, optionally steering angles of about 5 degrees or less from the central steering angle position, optionally steering angles of about 3 degrees or less from the central steering angle position, optionally steering angles of about 2 degrees or less from the central steering angle position.

5. The working vehicle steering system of any preceding claim, wherein the steering actuation system comprises one or more electric linear actuators configured to move the one or more steerable wheels between the range of steering angles.

6. The working vehicle steering system of any of claims 1 to 4, wherein the steering actuation system comprises one or more hydraulic steering cylinders configured to move the one or more steerable wheels between the range of steering angles; optionally, wherein the steering actuation system comprises an electrohydraulic valve arrangement configured to control a flow of hydraulic fluid to and from the one or more hydraulic steering cylinders; optionally, wherein the electrohydraulic valve arrangement comprises a solenoid-operated directional control valve.

7. The working vehicle steering system of any preceding claim, comprising a steering input for manually controlling the steering actuation system; optionally, wherein the steering input comprises left and right steering buttons or switches; and/or wherein the steering input comprises a lever or joystick; and/or wherein the steering input comprises a steering wheel.

8. The working vehicle steering system of any preceding claim, wherein the controller is configured to determine whether the one or more steerable wheels are rotating or not, and wherein the controller is configured to output the control signal when it is determined that one or more steerable wheels are rotating.

9. The working vehicle steering system of any preceding claim, wherein the one or more steerable wheels are each carried by a respective wheel hub pivotally mounted to an axle; optionally, wherein the wheel hub comprises an electric traction motor for driving the associated steerable wheel.

10. The working vehicle steering system of any preceding claim, wherein the working vehicle steering system comprises a manual override input and wherein the controller is configured not to output the control signal when the manual override input is activated by a user.

11. The working vehicle steering system of any preceding claim, wherein the controller is configured to implement feedback control using the steering angle signal to vary the control signal.

12. A controller for a working vehicle steering system, wherein the controller is configured to:
a) receive a steering angle signal from a steering angle sensor, wherein the steering angle signal is indicative of a steering angle of one or more steerable wheels;
b) determine from the steering angle signal whether the steering angle of the one or more steerable wheels is within a predetermined steering angle range; and
c) when it is determined that the steering angle of the one or more steerable wheels is within the predetermined steering angle range, output a control signal to direct a steering actuation system to automatically move the one or more steerable wheels towards a central steering angle position.

13. A working vehicle comprising the working vehicle steering system of any of claims 1 to 11 and/or the controller of claim 12.

14. The working vehicle of claim 13, wherein the working vehicle is a mobile elevated work platform.

15. A method of automatically moving one or more steerable wheels towards a central steering angle position, the method comprising:
a) receiving a steering angle signal from a steering angle sensor;
b) determining from the steering angle signal whether a steering angle of the one or more steerable wheels is within a predetermined steering angle range; and
c) when it is determined that the steering angle of the one or more steerable wheels is within the predetermined steering angle range, automatically moving the one or more steerable wheels towards a central steering angle position.
